# EUROPÄISCHE PATENTANMELDUNG

(11) **EP 4 616 964 A1**
(43) Veröffentlichungstag der Anmeldung: **17.09.2025**
(21) Anmeldenummer: 25162488.8
(22) Anmeldetag: 10.03.2025
(51) Int. Cl.: B05C 17/01, F16N 11/08

(54) **VORRICHTUNG ZUM BETÄTIGEN EINER KARTUSCHE**

(30) Priorität: 13.03.2024 DE 102024107124; 12.06.2024 DE 102024116438
(71) Anmelder: JOST-Werke Deutschland GmbH, 63263 Neu-Isenburg (DE); TriboServ GmbH & Co. KG, 97505 Geldersheim (DE)
(72) Erfinder: WEIGAND, Michael, 97505 Geldersheim (DE); APPELMANN, Johannes, 63150 Heusenstamm (DE); KAUFHOLD, Benjamin, 37136 Seeburg (DE)
(74) Vertreter: WSL Patentanwälte Partnerschaft mbB

(57) **Zusammenfassung**

Die Erfindung betrifft eine Betätigungsvorrichtung (10) für eine Kartusche (12) mit einem Gehäuse (14), in dem ein linear wirkender Antrieb angeordnet ist, wobei der Antrieb einen Antriebsmotor (22) und ein Getriebe aufweist, wobei das Getriebe eine Antriebsspindel (34) und eine Spindelmutter (30) aufweist, wobei der Antriebsmotor (22) mit der Spindelmutter (30) zur Übertragung einer Drehbewegung in Eingriff steht, wobei die Antriebsspindel (34) bei Drehung der Spindelmutter (30) relativ zum Gehäuse (14) hin- und her-bewegbar angeordnet ist, wobei das Gehäuse (14) eine Wandung aufweist, durch die die Antriebsspindel mit einem ersten axialen Ende herausführbar ist, wobei die Antriebsspindel an dem ersten axialen Ende mit einem Verdrängungselement der Kartusche in Eingriff bringbar ist, wobei die Antriebsspindel entlang eines Abschnittes in dem Gehäuse ein erstes Drehsicherungselement aufweist, wobei ein dem Gehäuse zugeordnetes zweites Drehsicherungselement vorgesehen ist, und wobei die Spindel wenigstens auf einem Abschnitt gegen das Gehäuse drehsicher abgestützt ist. Die Erfindung betrifft außerdem eine Kombination aus einer solchen Vorrichtung und einer Kartusche.

## Beschreibung

Die Erfindung betrifft eine Vorrichtung zum Betätigen einer Kartusche, nachfolgend auch als Betätigungsvorrichtung bezeichnet, zum Ausgeben eines viskosen Mediums, insbesondere zum Ausgeben und/oder Dosieren eines Schmierstoffes an eine Schmierstelle. Die Erfindung betrifft des Weiteren eine Kombination aus einer solchen Vorrichtung und einer Kartusche, nachfolgend auch als Schmierstoffgeber bezeichnet.

Die Erfindung betrifft im engeren Sinne elektromechanische Schmierstoffgeber mit Schmierstoffkartuschen und einem elektromotorischen Antrieb zur Betätigung derselben. Bei elektromechanischen Schmierstoffgebern kommt als Getriebeelement meist ein Spindelantrieb zur Umwandlung des Drehmoments aus dem Antriebsmotor in eine axiale Vortriebsbewegung eines Verdrängungselements oder Kolbens zum Einsatz. Die Dosierung des Schmierstoffes wird beispielsweise durch einen Mikrocontroller gesteuerten Antrieb in Abhängigkeit von dem Schmierstoffbedarf sowie äußeren Einflüssen, wie beispielsweise die Temperatur, realisiert.

Elektronische Dosiervorrichtungen für medizinischen, molekularbiologischen und pharmazeutischen Anwendungen sind beispielsweise bekannt aus der Schrift EP 3 399 214 A1. Die WO 2022/117 890 A1 befasst sich mit roboterbetriebenen Dispensiersystemen. Andere automatische Dosiervorrichtungen für flüssige und pastöse Medien in industriellen Anwendungen sind aus den Schriften DE 41 07 479 A1, US 2023/0 026 919 A1 oder DE 102 34 881 A1 bekannt. Die Schrift US 2002/0 120 235 A1 offenbart einen handbetätigten Applikationspen zur Verabreichung von Medizindosen. In der Schrift DE 10 2009 027 783 A1 wird ein wahlweise motorisch unterstützter Handapplikator besprochen. Die EP 0 598 867 B1 hat eine gasdruckbetriebene Vorrichtung zur gezielten Abgabe einer Flüssigkeit oder eines viskosen Mediums zum Gegenstand. Die JP H11-235 546 A offenbart eine mittels einem Schrittmotor angetriebene Spritze. Aus der Schrift US 11 746 656 B1 ist eine Mikrodosierpumpe zur Applikation kleiner Mengen flüssiger Materialien, insbesondere zur Verwendung bei der Montage elektronischer Komponenten bekannt.

Die Erfindung findet beispielsweise Anwendung bei Medienschmierung, welche regelmäßig in kleinen Dosierungen des Schmierstoffes stattfindet und bei der deshalb eine Automatisierung hilfreich ist. Andere Anwendungen erfolgen an für Personen erschwert zugänglichen Standorten oder mit Zutrittsbeschränkungen.

Derartige Betätigungsvorrichtungen und Schmierstoffgeber sind beispielsweise aus den Veröffentlichungen DE 20 2012 100 014 U1, DE 43 21 452 C1, DE 10 2005 016 259 A1, DE 44 22 407 A1 oder DE 92 14 096 U1 bekannt. Die bekannten Vorrichtungen weisen einheitlich ein Gehäuse mit einem linear wirkenden Antrieb auf, wobei der Antrieb einen Antriebsmotor und ein Getriebe aufweist und wobei das Getriebe zumindest eine Antriebsspindel umfasst. In der DE 44 22 407 A1 und der DE 9 214 096 U1 werden Lösungen diskutiert, bei denen der Antriebsmotor über weitere Getriebekomponenten auf die Antriebsspindel wirkt und diese in eine Drehung versetzt. Am jeweils unteren Ende des Gehäuses befindet sich, mittels eines Gewindes aufgeschraubt oder einstückig mit dem Antriebsgehäuse verbunden, eine Kartusche mit einem Aufnahmeraum, einer Ausgabeöffnung am unteren Ende und mit einem Verdrängungselement oder Kolben zum Ausgeben des viskosen Mediums durch eine Ausgabeöffnung. Der Kolben weist jeweils ein Gewindeelement auf, welches mit der drehbar angetriebenen Antriebspindel der Vorrichtung der Gestalt zusammenwirkt, dass der drehfest in der Kartusche positionierte Kolben bei Drehung der Spindel je nach Drehrichtung ab- bzw. aufwärts bewegt wird. Da der Kolben mittels des Schraubengewindes mit der Antriebsspindel verbunden ist, ist entweder der Kolben samt Spindel der Kartusche zugeordnet, wie in der Schrift DE 44 22 407 A1 gezeigt, oder beides zusammen ist der Betätigungsvorrichtung zugeordnet wie in der Schrift DE 9 214 096 U1 gezeigt.

In Abgrenzung hierzu zeigt die Schrift DE 10 2005 016 259 A1 eine Lösung mit einer nicht wechselbaren Kartusche, die einen Kolben ohne Antriebsspindel als strukturelles Bauteil enthält. Ermöglicht wird dies durch eine umgekehrte Kinematik des Antriebs. Eine in dem Dokument nicht dargestellte Spindel wird durch eine drehbar angetriebene Spindelmutter abwärts bewegt. Bei der Abwärtsbewegung drückt die Spindel auf den in der Kartusche gelagerten Kolben und bewegt diesen in Richtung der Ausgabeöffnung zur Ausgabe des Schmiermittels. Die Kartusche kann nach dem Lösen einer Fixierung einfach in axialer Richtung von der Betätigungsrichtung abgenommen werden.

Unter Last erhöht sich der axiale Druck auf die Antriebsspindel. Dadurch wird die Antriebsspindel zunächst daran gehemmt, sich mit der Spindelmutter mitzudrehen. Überschreitet aber das von der Spindelmutter bei einer Drehung auf die Antriebsspindel übertragene Drehmoment einen bestimmten Wert, neigt diese dazu, sich mit der Spindelmutter mitzudrehen, wodurch bei Betätigung des Antriebs die axiale Vorwärtsbewegung der Antriebsspindel und die Schmierstoffausgabe nicht mehr sichergestellt sind. Umgekehrt kann das Mitdrehen der Antriebsspindel auch dadurch begünstigt sein, dass die Drehhemmung der Antriebsspindel ohne Last zu gering ist. Dies kann beispielsweise der Fall sein, wenn die Antriebsspindel nach dem Entleeren der Kartusche vollständig aus dem Gehäuse herausgedreht ist und zurückgedreht werden muss.

Andererseits ist ein Freilauf der Antriebsspindel insbesondere bei Schmierstoffgebern mit auswechselbarer Kartusche sehr hilfreich, bei der in der Regel die Kartusche mit dem Gehäuse der Betätigungsvorrichtung durch eine Schraubverbindung fixiert ist. Beim Aufschrauben der Kartusche auf das Gehäuse der Vorrichtung entsteht irgendwann ein Kontakt zwischen der Antriebsspindel und dem Verdrängungselement, der zur Vermeidung von Beschädigungen an der Kartusche oder der Betätigungsvorrichtung ein Mitdrehen der Antriebsspindel erforderlich machen kann.

Aufgabe der vorliegenden Erfindung ist es deshalb, die eingangs genannte Vorrichtung zum Betätigen einer Kartusche (Betätigungsvorrichtung) und die Kombination (Schmierstoffgeber) insgesamt betriebssicherer zu gestalten.

Die Aufgabe wird erfindungsgemäß durch eine Vorrichtung zum Betätigen einer Kartusche zum Ausgeben eines viskosen Mediums mit einem Gehäuse, in dem ein linear wirkender Antrieb angeordnet ist, gelöst, wobei der Antrieb einen Antriebsmotor und ein Getriebe aufweist, wobei das Getriebe eine Antriebsspindel und eine Spindelmutter aufweist, wobei der Antriebsmotor mit der Spindelmutter zur Übertragung einer Drehbewegung direkt oder indirekt in Eingriff steht, wobei die Antriebsspindel eine Antriebsachse definiert, um welche die Spindelmutter drehbar angeordnet ist und entlang welcher die Antriebsspindel bei Drehung der Spindelmutter relativ zum Gehäuse über einen Hub hin- und her-bewegbar angeordnet ist, wobei das Gehäuse eine Wandung aufweist, durch die die Antriebsspindel mit einem ersten axialen Ende herausführbar ist, wobei die Antriebsspindel an dem ersten axialen Ende mit einem Verdrängungselement (Kolben) der Kartusche in Eingriff bringbar ist, wobei die Antriebsspindel entlang eines Abschnittes in dem Gehäuse ein erstes Drehsicherungselement aufweist, wobei ein dem Gehäuse zugeordnetes zweites Drehsicherungselement vorgesehen ist, und wobei das erste Drehsicherungselement und das zweite Drehsicherungselement der Gestalt zusammenwirken, dass die Spindel wenigstens auf einem Teil des Hubs gegen das Gehäuse drehsicher abgestützt ist.

Das Gehäuse, nachfolgend auch Antriebsgehäuse genannt, umschließt typischerweise einen Raum, in dem sowohl der Antriebsmotor als auch das Getriebe und gegebenenfalls eine Steuerelektronik für den Antriebsmotor Platz finden. Die Antriebsspindel ist an ihrem ersten axialen Ende optional im eingefahrenen und jedenfalls im ausgefahrenen Zustand aus dem Gehäuse herausgeführt, d. h. ein Abschnitt der Antriebsspindel ragt durch die Wandung aus dem Gehäuse heraus. Der übrige Abschnitt der Antriebsspindel verbleibt stets innerhalb des Gehäuses.

Das erste Drehsicherungselement befindet sich wenigstens entlang des Abschnitts der Antriebsspindel, der stets in dem Gehäuse verbleibt. Das dem Gehäuse zugeordnete zweite Drehsicherungselement steht mit dem ersten Drehsicherungselement wenigstens auf einem Teil des Hubs und bevorzugt über den gesamten Hub in Eingriff, wodurch die Antriebsspindel drehsicher abgestützt wird.

Steht die Antriebsspindel mit ihrem ersten axialen Ende mit dem Verdrängungselement der Kartusche in Eingriff und wird dagegen angedrückt, um das Verdrängungselement in die Kartusche voranzutreiben, stützt sie sich in axialer Richtung gegen die Spindelmutter ab. Die Spindelmutter ist zu diesem Zweck gegen ein Strukturbauteil, zum Beispiel eine Trägerplatte, in dem Gehäuse abgestützt. Um auch unter Last eine verschleißarme Drehung der Spindelmutter zu ermöglichen, befindet sich zwischen der Spindelmutter und dem Strukturbauteil bevorzugt ein Gleitelement, welches dort lose eingebracht oder an der Spindelmutter oder an dem Strukturbauteil befestigt sein kann.

Bevorzugt bilden das erste Drehsicherungselement und das zweite Drehsicherungselement einen Formschluss oder einen Kraftschluss.

Analog einer Kupplung verbinden die zusammenwirkenden ersten und zweiten Drehsicherungselemente die Antriebsspindel und das Gehäuse wahlweise starr oder bevorzugt - analog zu einer Rutschkupplung - mit begrenzter Drehmomentübertragung. Der Begriff Drehsicherung im Sinne dieser Schrift ist also nicht auf eine starre Verbindung beschränkt, sondern schließt auch solche Verbindungen ein, welche bei Auftreten oder Überschreiten eines bestimmten Drehmoments eine relative Drehung der Antriebsspindel zu dem Gehäuse zulässt. Eine Drehsicherung mit begrenzter Drehmomentübertragung ist gegenüber einer starren Drehsicherung deshalb in Fällen bevorzugt, in denen sichergestellt werden soll, dass bei Auftreten großer Drehmomente das Getriebe und/oder der Antriebsmotor vor einer Beschädigung geschützt sind. Dies kann beispielsweise beim Aufschrauben einer lösbar verbundenen Kartusche, wie vorstehend beschrieben notwendig sein.

Eine kraftschlüssige Drehsicherung - analog einer Reibkupplung - kann beispielsweise realisiert werden, indem auf den Außenumfang der Antriebsspindel als erstes Drehsicherungselement ein Reibelement als zweites Drehsicherungselement angedrückt wird. Je nach Andrückkraft, Größe der Reibfläche und Materialpaarung kann die Spindel bis zu einem gewissen Drehmoment so festgehalten werden. Gemäß einer alternativen Lösung kann das Reibelement auch ähnlich einer selbstsichernden Mutter so ausgestaltet sein, dass es auf einem Axialabschnitt der Gewindespindel mit Teilen der Gewindeflanken oder mit dem vollständigen Gewindeprofil reib- oder kraftschlüssig interagiert.

Eine Drehsicherung mit begrenzter Drehmomentübertragung lässt sich nicht nur durch eine kraftschlüssige Verbindung erzielen, sondern auch im Wege eines Formschlusses. Bevorzugt bilden in solchen Fällen das erste Drehsicherungselement und das zweite Drehsicherungselement einen Formschluss, wobei das zweite Drehsicherungselement entgegen einer Rückstellkraft elastisch verformbar oder von dem ersten Drehsicherungselement wegbewegbar und dadurch der Formschluss aufhebbar ist.

Ein Formschluss lässt sich bevorzugt erzielen, indem das erste Drehsicherungselement in Form einer oder mehrerer Abflachungen entlang des Abschnitts an der Antriebsspindel ausgestaltet ist und das zweite Drehsicherungselement ein oder mehrere an der Abflachung oder an den Abflachungen anliegende, mittelbar oder unmittelbar mit dem Gehäuse verbundene Führungselemente aufweist.

Alternativ oder zusätzlich kann das erste Drehsicherungselement in Form einer oder mehrerer Vertiefungen entlang des Abschnitts in der Antriebsspindel ausgestaltet sein und das zweite Drehsicherungselement einen oder mehrere in die Vertiefung oder in die Vertiefungen eingreifende, mittelbar oder unmittelbar mit dem Gehäuse verbundene Vorsprünge aufweist.

Die Abflachung oder Abflachungen entlang des Abschnitts der Antriebsspindel werden hierin nachfolgend auch als Schlüsselfläche bzw. Schlüsselflächen bezeichnet. Zwei Führungselemente des zweiten Drehsicherungselements bilden ein dazu passendes Schlüsselmaul, welches die Schlüsselflächen der Antriebsspindel umgreift. Die Vertiefung oder Vertiefungen können in Form von Einkerbungen oder Nuten oder Durchbrüchen realisiert sein. Der Vorsprung oder die Vorsprünge des zweiten Drehsicherungselements können von in die Vertiefungen eingreifenden Stiften gebildet sein.

Das mit dem Gehäuse verbundene Führungselement ist vorzugsweise elastisch entgegen einer Rückstellkraft von dem ersten Drehsicherungselement wegbewegbar ausgestaltet.

Bei einer erfindungsgemäßen Kombination (Schmierstoffgeber) aus der Vorrichtung und einer Kartusche weist die Kartusche einem Aufnahmeraum zur Aufnahme des viskosen Mediums, eine Ausgabeöffnung für das viskose Medium und ein dem Aufnahmeraum zugeordnetes Verdrängungselement oder Kolben zum Fördern des viskosen Mediums aus dem Aufnahmeraum durch die Ausgabeöffnung auf.

Die Kartusche kann dabei einteilig an das Gehäuse angeformt sein.

Bevorzugt aber ist die Kartusche lösbar mit dem Gehäuse verbindbar. Dementsprechend weist das Gehäuse bevorzugt ein Verbindungselement zur lösbaren Verbindung mit einer Kartusche auf.

Besonders bevorzugt ist die Kartusche mittels einer Schraubverbindung oder einer Bajonettverbindung mit dem Gehäuse verbindbar. Das Verbindungselement ist demgemäß bevorzugt in Form eines Gewindes oder eines Elements eines Bajonettverschlusses ausgebildet. Ein komplementäres Verbindungselement in Form eines Gewindes oder eines Elements eines Bajonettverschlusses ist demzufolge an der Kartusche angeordnet.

Gemäß einer bevorzugten Ausgestaltung der Vorrichtung weist die Antriebsspindel an ihrem ersten axialen Ende ein Koppelelement zur Verbindung mit dem Verdrängungselement oder Kolben der Kartusche auf.

Das Koppelelement ist weiterhin bevorzugt drehfest mit der Antriebsspindel verbunden und weist radial von der Antriebsachse beabstandet ein erstes Anschlagelement zum in Eingriff bringen mit dem Verdrängungselement oder Kolben auf.

Auf diese Weise ist die Vorrichtung vorteilhaft ausgestaltet, um in Kombination mit einer Kartusche zusammenzuwirken, deren Verdrängungselement ebenfalls radial von der Antriebsachse beabstandet ein zweites Anschlagelement aufweist, wobei das erste Anschlagelement und das zweite Anschlagelement der Gestalt zusammenwirken, dass das Koppelelement gegen das Verdrängungselement drehsicher abstützbar ist.

Die Kombination oder der Schmierstoffgeber stellt in dieser Ausgestaltung eine zweifache Drehsicherung bereit, die wie folgt wirkt. Im Falle kleinerer Drehmomente, während beispielsweise das Koppelelement keinen oder nur einen leichten Kontakt mit dem Verdrängungselement hat, wird die Antriebsspindel mittels des ersten Drehsicherungselements und des zweiten Drehsicherungselements festgehalten und in Folge der Drehung der Spindelmutter bewegt.

Sobald das Koppelelement axial Druck auf das Verdrängungselement ausübt, erhöht sich das von der Spindelmutter auf die Antriebsspindel übertragene Drehmoment, bis die vorstehend beschriebene Drehsicherung mit begrenzter Drehmomentübertragung die Antriebsspindel freigibt und diese sich mit der Spindelmutter mitdrehen kann. Hierdurch wird zunächst ein weiteres axiales Ausfahren der Antriebsspindel verhindert. Die Antriebsspindel dreht sich aber nur soweit mit, bis das erste Anschlagelement des Koppelelements und das zweite Anschlagelement des Verdrängungselements in Eingriff gelangen. Von diesem Moment an stützt sich das Koppelelement über das erste Anschlagelement und das zweite Anschlagelement an dem Verdrängungselement ab. Das Verdrängungselement ist seinerseits beispielsweise durch Reibschluss oder durch Formschluss gegenüber der Kartuschenwand abgestützt, sodass ein Weiterdrehen der Antriebsspindel wirksam verhindert ist. Die Antriebsspindel wird mit dem Koppelelement fortan in axialer Richtung weiter ausgefahren und so das Verdrängungselement in den Aufnahmeraum der Kartusche vorgeschoben, wobei das viskose Medium aus dem Aufnahmeraum durch die Ausgabeöffnung herausgedrückt wird.

Gemäß einer vorteilhaften Weiterbildung der Erfindung weist die Vorrichtung eine mit dem Antriebsmotor verbundene Motorsteuerung auf, die eine Sensorik zur Erfassung einer oberen und/oder einer unteren Endposition der Antriebsspindel umfasst.

Die Sensorik kann beispielsweise durch eine Messelektronik zur Erfassung der Strom- oder Leistungsaufnahme des Antriebsmotors und somit zur indirekten Erfassung des benötigten Drehmoments ausgestaltet sein. Alternativ oder zusätzlich kann die Sensorik einen oder mehrere berührungslose oder mechanische Positionsschalter umfassen.

Weiterhin bevorzugt ist die Motorsteuerung eingerichtet, den Antriebsmotor bei Erfassung der oberen oder unteren Endposition abzuschalten oder die Drehrichtung des Antriebsmotors umzukehren.

Auf diese Weise wird sichergestellt, dass der Antriebsmotor die Antriebsspindel stets auch aus der jeweiligen Endposition wieder herausfahren kann.

Weiterhin bevorzugt weist die Vorrichtung ein elastisches Element auf, welches so angeordnet ist, dass es in einer in das Gehäuse eingefahrenen oberen Endposition der Antriebsspindel bezogen auf die Axialrichtung mittelbar oder unmittelbar zwischen der Antriebsspindel und dem Gehäuse vorgespannt ist.

Das elastische Element stellt sicher, dass das benötigte Drehmoment zum Antreiben der Antriebsspindel bei Erreichen der Endposition langsam bzw. in definierter Weise ansteigt, sodass die Bestimmung der Endposition durch Erfassung der Strom- oder Leistungsaufnahme zuverlässig erfolgen kann und vermieden wird, dass die Antriebsspindel in der Endposition so festgefahren ist, dass das Drehmoment des Motors zum Herausfahren aus dieser Position nicht mehr genügt.

Das elastische Element kann zu diesem Zweck vorzugsweise zwischen dem Koppelelement und einem ersten Abschnitt der Gehäusewandung angeordnet sein. Alternativ oder zusätzlich kann sich das elastische Element zwischen einem zweiten axialen Ende der Antriebsspindel und einem zweiten Abschnitt der Gehäusewandung befinden.

Die Erfindung wird nachfolgend anhand der Figurenzeichnungen weiter erläutert. Es zeigen:
- Figur 1: Eine Schnittdarstellung durch die erfindungsgemäße Kombination in einer ersten Schnittebene;
- Figur 2: die erfindungsgemäße Kombination nach Figur 1 in perspektivischer Schnittdarstellungen, geschnitten in einer zweiten Ebene;
- Figur 3: eine perspektivische Ansicht der erfindungsgemäßen Vorrichtung mit Blick auf die Verbindungseite zu der Kartusche; und
- Figur 4: eine perspektivische Ansicht der Kartusche mit Blick auf die Verbindungseite zu der erfindungsgemäßen Vorrichtung.

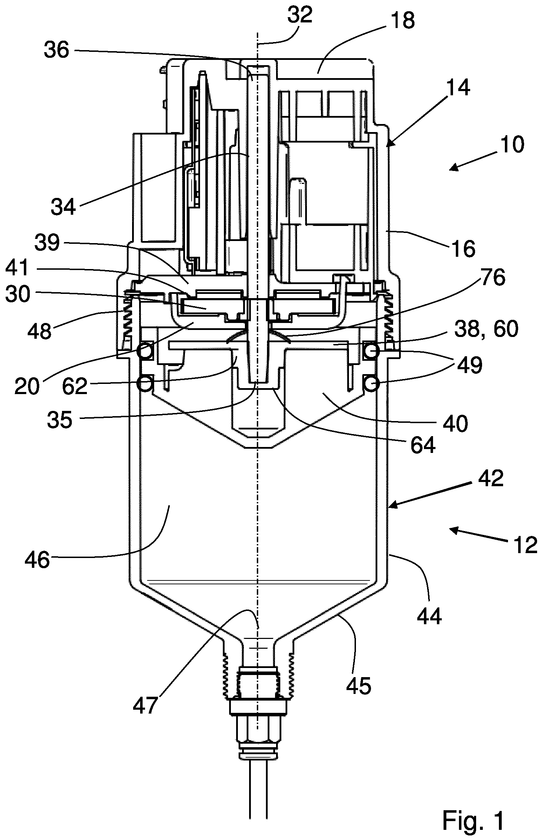

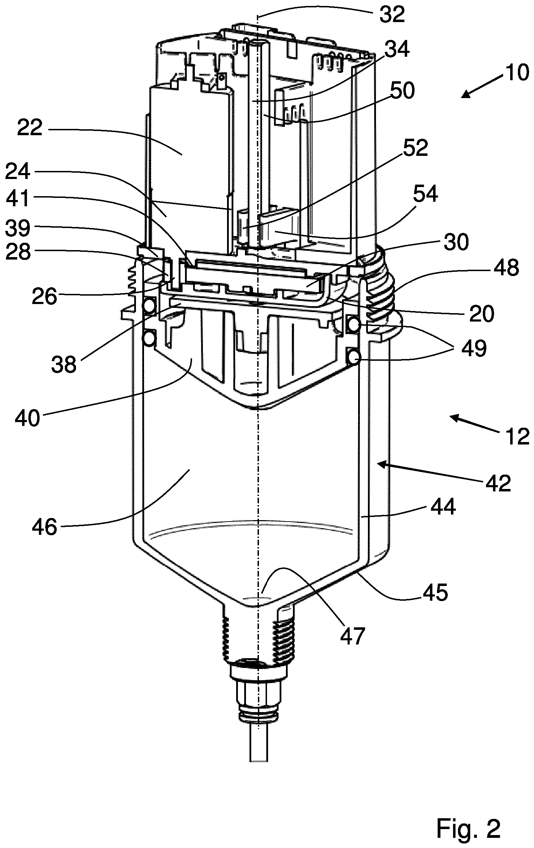

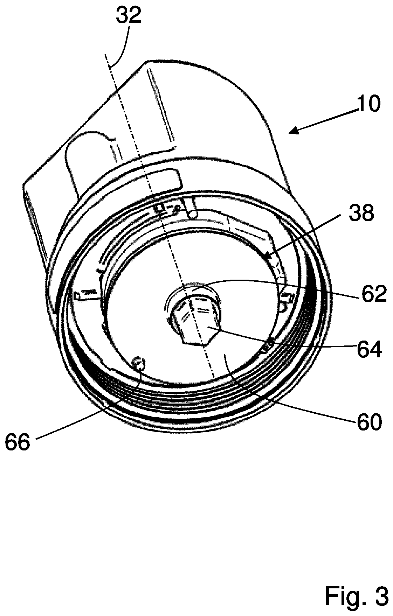

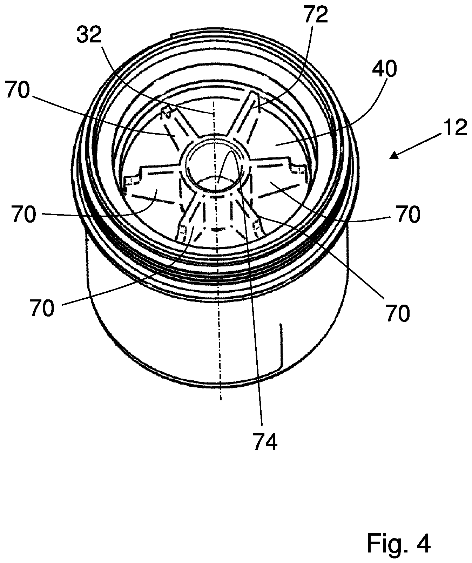

In den Figuren 1 und 2 ist dieselbe zusammengesetzte Kombination, bestehend aus einer Betätigungsvorrichtung 10 und einer Kartusche 12, gezeigt. Die Betätigungsvorrichtung 10 weist ein Gehäuse 14 mit einer umfänglichen Gehäusewandung 16, einem Gehäusedeckel 18, auch als zweiter Abschnitt der Gehäusewandung bezeichnet, und einem Gehäuseboden 20, auch als erster Abschnitt der Gehäusewandung bezeichnet, auf, wobei in der Darstellung der Figur 2 zur besseren Sichtbarkeit der innenliegenden Elemente das Gehäuse 14 der Betätigungsvorrichtung 10' mit Ausnahme des Gehäusebodens 20 weggelassen wurde. Die Figur 3 zeigt die erfindungsgemäße Betätigungsvorrichtung separat. Die Figur 4 zeigt die Kartusche aus den Figuren 1 und 2 ebenfalls separat.

In dem Gehäuse 14 ist ein linear wirkender Antrieb, bestehend aus einem Antriebsmotor 22 und einem Getriebe, angeordnet. Das Getriebe umfasst ein unmittelbar an den Antriebsmotor angeschlossenes Motorgetriebe 24. Aus dem gemeinsamen Gehäuse ist eine Abtriebswelle 26 herausgeführt. Auf der Abtriebswelle 26 ist ein Stirnrad 28 montiert, welches die Drehung der Abtriebswelle 26 auf eine Spindelmutter 30 mit umfänglichem Zahnkranz überträgt. Entlang einer Antriebsachse 32 erstreckt sich als weiterer Teil des Getriebes eine mit der Spindelmutter zusammenwirkende Antriebsspindel 34. Die Spindelmutter 30 dreht sich also um diese Antriebsachse 32.

Die Antriebsspindel 34 ist mit ihrem ersten axialen Ende 35 durch den Gehäuseboden 20 aus dem Gehäuse 14 der Betätigungsvorrichtung 10 herausgeführt. An dem ersten axialen Ende 35 der Antriebsspindel 34 ist ein Koppelelement 38 angeordnet und mit der Antriebsspindel 34 drehfest verbunden. Über das Koppelelement 38 ist die Antriebsspindel 34 in dem in den Figuren 1 und dargestellten zusammengebauten Zustand mittelbar mit einem Verdrängungselement oder Kolben 40 der Kartusche 12 in Eingriff gebracht.

In dem Gehäuse 14 befindet sich eine Trägerplatte 39, gegen welche sich die Spindelmutter 30 unter Last abstützt. Der Gehäuseboden 20 ist in die Trägerplatte 39 von unten eingehängt. Seine Aufgabe ist es, die Spindelmutter 30 von unten zu schützen und in ihrer Position zu halten. Aufgabe des Gehäusebodens 20 ist es indes nicht, die unter Last auf die Spindelmutter wirkende Axialkraft in die Struktur des Gehäuses abzuleiten. Zwischen der Spindelmutter 30 und der Trägerplatte 39 befindet sich ein Gleitelement 41 für eine verschleißarme Drehung der Spindelmutter auch unter Last.

Die Kartusche 12 weist weiterhin eine Kartuschenwandung 42 mit einer Umfangswand 44 und einer dem Verdrängungselement oder Kolben 40 gegenüberliegenden Bodenwand 45 auf. Die Kartuschenwandung 42 umschließt zusammen mit dem Kolben 40 einen Aufnahmeraum 46 zur Aufnahme des nicht dargestellten viskosen Mediums. In der Bodenwand 45 befindet sich eine Ausgabeöffnung 47. Wird der Kolben 40 mittels des Antriebs aus der in den Figuren 1 und 2 gezeigten Darstellung in Richtung der Bodenwand 45 bewegt, so wird das viskose Medium durch die Ausgabeöffnung 47 aus der Kartusche 12 herausgefördert.

Das Gehäuse 14 der Betätigungsvorrichtung 10 und die Wandung 42 der Kartusche 12 sind zweiteilig ausgeführt und mittels einer Schraubverbindung 48 lösbar miteinander verbunden. Die Schraubverbindung 48 stellt nur eine mögliche Ausführungsform einer lösbaren Verbindung zwischen der Betätigungsvorrichtung 10 und der Kartusche 12 dar. An deren Stelle kann beispielsweise auch eine Bajonettverbindung, eine Rastverbindung oder eine andere selbsthemmende Steckverbindung vorgesehen sein.

Der Kolben 40 ist gegenüber der zylindrischen Innenfläche der Umfangswand 44 der Kartusche 12 mittels einer doppelten O-Ring-Dichtung 49 abgedichtet, damit das viskose Medium bei Druckbeaufschlagung nicht nach oben in Richtung der Betätigungsvorrichtung 10 entweichen kann. Ferner bewirkt die doppelte O-Ring-Dichtung 49 eine Drehsicherung des Kolbens 40 gegenüber der Kartuschenwandung 42 und dem damit verbundenen Gehäuse 14 der Betätigungsvorrichtung 10.

Damit sich die Antriebsspindel 34 ohne Belastung oder bei geringer Belastung nicht mit der rotierenden Spindelmutter 30 mitdrehen kann, weist diese entlang eines Abschnitts in dem Gehäuse 14 ein erstes Drehsicherungselement in Form zweier gegenüberliegender Abflachungen oder Schlüsselflächen 50 auf. An den Schlüsselflächen 50 liegen jeweils zweie auf beiden Seiten der Antriebsspindel 34 gegenüberliegende und mit dem Gehäuse 14 verbundene Führungselemente 52, 54 an, die das zweite Drehsicherungselement bilden. Die beiden Führungselemente 52, 54 bilden eine gabelförmige Anordnung mit einer Art Schlüsselmaul in ihrem Zwischenraum aus, welche die Schlüsselflächen 50 der Antriebsspindel 34 formschlüssig umgreift. Die Führungselemente 52 und 54 sind so konstruiert, dass sie, bezogen auf die Antriebsachse 32 radial auswärts elastisch ausweichen können, wenn das von der Antriebsspindel 34 über die Schlüsselflächen 46 ausgeübte Drehmoment einen bestimmten Wert übersteigt. Elastisch ausweichen bedeutet, dass die Führungselemente 52 und 54 der radial auswärts gerichteten Bewegung eine Rückstellkraft entgegensetzen, die sie nach Wegfall der Ursache für die Bewegung wieder in den Ausgangszustand zurückbewegt. Hierdurch wird sichergestellt, dass sich die Antriebsspindel 34 mit der Spindelmutter 30 mitdrehen kann, wenn beispielsweise die Kartusche 12 an das Gehäuse 10 der Betätigungsvorrichtung angeschraubt und dabei ein entsprechend großes Drehmoment auf die Antriebsspindel übertragen wird. Das erste Drehsicherungselement und das zweite Drehsicherungselement bilden auf diese Weise eine Drehsicherung mit begrenzter Drehmomentübertragung.

Das Koppelelement 38 ist ein überwiegend zylindersymmetrisches Element mit einer Scheibe 60, in axialer Fortsetzung einem Zylinderansatz 62 und wiederum in axialer Fortsetzung einem Sechskantelement 64, welches mit einem handelsüblichen Schlüssel betätigt werden kann, um beispielsweise die Antriebsspindel manuell auf- oder abwärts bewegen zu können. In dem zylindrischen Ansatz 62 und dem Sechskantelement 64 findet sich von der dem Gehäuse 14 zugewandten Seite des Koppelelements 38 her eine Bohrung, in welche die Antriebsspindel 34 zwecks Kraftschluss eingepresst ist und so eine drehfeste Verbindung zwischen der Antriebsspindel 34 und dem Koppelelement 38 herstellt. Um trotz der Drehsicherung mit begrenzter Drehmomentübertragung einen linearen Antrieb des Kolbens 40 bei großer Belastung sicherzustellen, muss die Antriebsspindel 34 im Betrieb schließlich an einer Weiterdrehung gehindert werden. Zu diesem Zweck weist das Koppelelement 38 auf seiner der Kartusche zugewandten Unterseite ein radial von der Antriebsachse 32 beabstandetes erstes Anschlagelement 66 auf.

Das Verdrängungselement 40 weist auf seiner der Betätigungsvorrichtung 10 zugewandten Oberseite eine Mehrzahl radial angeordneter Versteifungsrippen 70 auf, von denen eine Versteifungsrippe 72 ein zweites Anschlagelement des Kolbens 40 bildet. Die Versteifungsrippen 70, 72 definieren auf Ihrer der Betätigungsvorrichtung 10 zugewandten Oberseite einer ebene Auflagefläche senkrecht zur Antriebsachse 32, auf der die Scheibe 60 des Koppelelements 38 aufliegt. Der zylindrische Ansatz 62 ist dann in einer Zentrumsbohrung 74 in dem Kolben 40 zentriert.

Das zweite Anschlagelement 72 unterscheidet sich von dem übrigen Versteifungsrippen 70 dadurch, dass letztere jeweils im radial äußeren Bereich Freimachungen aufweisen, welche das erste Anschlagelement 66 bei einer relativen Drehung des Koppelelements 38 zu dem Kolben 40 passieren lassen. Je nach Drehrichtung der Antriebsspindel 34 schlägt das erste Anschlagelement 66 nach maximal einer annähernd vollständigen Umdrehung entweder links oder rechts an der durchgehende Versteifungsrippe 72 an. Das erste Anschlagelement 66 und das zweite Anschlagelement 72 wirken dann dergestalt zusammen, dass das Koppelelement 38 gegen das Verdrängungselement 40 drehsicher abgestützt ist.

Sowohl das Gehäuse 14 der Betätigungsvorrichtung 10 als auch die Wandung 42 der Kartusche 12 weisen eine im Wesentlichen kreiszylindrische Grundform auf, deren Längsachse mit der Antriebsachse 32 der Antriebsspindel 34 zusammenfällt. Hierdurch ist sichergestellt, dass sich beim Einschrauben der Kartusche 12 in das Gehäuse 14 der Betätigungsvorrichtung 10 der Kolben 40 um die Antriebsachse 32 dreht und somit ein Drehmoment um diese Achse herum über das Koppelelement 38 auf die Antriebsspindel 34 überträgt, sobald die Scheibe 60 auf der ebenen Auflagefläche aufliegt. Die Drehsicherung mit begrenzter Drehmomentübertragung gibt bei Überschreiten des voreingestellten Grenzmoments die Antriebsspindel zur Drehung frei, sodass die Kartusche und die Betätigungsvorrichtung beim Zusammenschrauben nicht beschädigt werden.

In dem Gehäuse 14 der Betätigungsvorrichtung 10 befindet sich neben dem Antriebsmotor und dem Getriebe eine mit dem Antriebsmotor verbundene, nicht dargestellte Motorsteuerung einschließlich einer elektronischen Sensorik zu Erfassung der oberen und der unteren Endposition der Antriebsspindel 34. Die obere Endposition wird durch ein elastisches Element in Form einer Federscheibe 76 zwischen dem Koppelelement 38 und dem Gehäuseboden 20, definiert. Die Federscheibe 76 wird bei Annäherung der Antriebsspindel 34 an ihre obere Endposition, bezogen auf die axiale Richtung zwischen dem Koppelelement 38 und dem Gehäuse 14 und damit mittelbar zwischen der Antriebsspindel 34 und dem Gehäuse 14 vorgespannt. Hierdurch steigt das für den Antrieb benötigte Drehmoment zunächst linear an, wodurch die Sensorik der Motorsteuerung eine erhöhte Leistungsaufnahme des Antriebsmotors 22 registriert und diesen bei Erreichen eines voreingestellten Grenzwerts abschaltet.

Anstelle der Anordnung eines elastischen Elements zwischen dem Koppelelement 38 und dem zweiten Abschnitt 20 der Gehäusewand 14 kann alternativ oder zusätzlich ein elastisches Element zwischen einem zweiten axialen Ende 36 der Antriebsspindel 34 und dem zweiten Abschnitt der Gehäusewandung 14, also dem Gehäusedeckel 18, vorgesehen sein.

### Bezugszeichenliste

- 10: Betätigungsvorrichtung
- 12: Kartusche
- 14: Gehäuse der Betätigungsvorrichtung
- 16: umfängliche Gehäusewandung
- 18: Gehäusedeckel, zweiter Abschnitt der Gehäusewandung
- 20: Gehäuseboden, erster Abschnitt der Gehäusewandung
- 22: Antriebsmotor
- 24: Motorgetriebe
- 26: Abtriebswelle des Motorgetriebes
- 28: Stirnrad
- 30: Spindelmutter
- 32: Antriebsachse
- 34: Antriebsspindel
- 35: erstes axiales Ende der Antriebsspindel
- 36: zweites axiales Ende der Antriebsspindel
- 38: Koppelelement
- 39: Trägerplatte
- 40: Verdrängungselement, Kolben
- 41: Gleitelement
- 42: Kartuschenwandung
- 44: Umfangswand
- 45: Bodenwand
- 46: Aufnahmeraum
- 47: Ausgabeöffnung
- 48: Schraubverbindung
- 49: O-Ring-Dichtung
- 50: Abflachung, Schlüsselfläche
- 52: Führungselement
- 54: Führungselement
- 60: Scheibe des Koppelelements
- 62: Zylinderansatz
- 64: Sechskantelement
- 66: erstes Anschlagelement
- 70: Versteifungsrippe
- 72: zweites Anschlagelement, Versteifungsrippe
- 74: Zentrumsbohrung
- 76: elastisches Element, Federscheibe

## Patentansprüche

1. Vorrichtung (10) zum Betätigen einer Kartusche (12) zum Ausgeben eines viskosen Mediums mit einem Gehäuse (14), in dem ein linear wirkender Antrieb angeordnet ist, wobei der Antrieb einen Antriebsmotor (22) und ein Getriebe aufweist,
wobei das Getriebe eine Antriebsspindel (34) und eine Spindelmutter (30) aufweist, wobei der Antriebsmotor (22) mit der Spindelmutter (30) zur Übertragung einer Drehbewegung direkt oder indirekt in Eingriff steht,
wobei die Antriebsspindel (34) eine Antriebsachse (32) definiert, um welche die Spindelmutter (30) drehbar angeordnet ist und entlang welcher die Antriebsspindel (34) bei Drehung der Spindelmutter (30) relativ zum Gehäuse (14) über einen Hub hin- und her-bewegbar angeordnet ist,
wobei das Gehäuse (14) eine Wandung (16, 18, 20) aufweist, durch die die Antriebsspindel (34) mit einem ersten axialen Ende (35) herausführbar ist,
wobei die Antriebsspindel (34) an dem ersten axialen Ende (35) mittelbar oder unmittelbar mit einem Verdrängungselement (40) der Kartusche (12) in Eingriff bringbar ist, wobei die Antriebsspindel (34) entlang eines Abschnittes in dem Gehäuse (14) ein erstes Drehsicherungselement aufweist,
wobei ein dem Gehäuse (14) zugeordnetes zweites Drehsicherungselement vorgesehen ist, und wobei das erste Drehsicherungselement und das zweite Drehsicherungselement der Gestalt zusammenwirken, dass die Antriebsspindel (34) wenigstens auf einem Teil des Hubs gegen das Gehäuse (14) drehsicher abgestützt ist.

2. Vorrichtung (10) nach Anspruch 1,
**dadurch gekennzeichnet, dass** das erste Drehsicherungselement und das zweite Drehsicherungselement einen Formschluss oder einen Kraftschluss bilden.

3. Vorrichtung (10) nach Anspruch 2,
**dadurch gekennzeichnet, dass** das erste Drehsicherungselement und das zweite Drehsicherungselement einen Formschluss bilden, wobei das zweite Drehsicherungselement entgegen einer Rückstellkraft elastisch verformbar oder elastisch von dem ersten Drehsicherungselement wegbewegbar und dadurch der Formschluss aufhebbar ist.

4. Vorrichtung (10) nach einem der vorstehenden Ansprüche,
**dadurch gekennzeichnet, dass** das erste Drehsicherungselement in Form einer oder mehrerer Abflachungen (50) oder einer oder mehrerer Vertiefungen ausgestaltet ist **und dass** das zweite Drehsicherungselement einen oder mehrere an den Abflachungen (50) anliegende Führungselemente (52, 54) bzw. einen oder mehrerer in die Vertiefungen eingreifende Vorsprünge aufweist.

5. Vorrichtung (10) nach einem der vorstehenden Ansprüche,
**dadurch gekennzeichnet, dass** das Gehäuse (14) ein Verbindungselement (48) zur lösbaren Verbindung mit einer Kartusche (12) aufweist.

6. Vorrichtung (10) nach einem der vorstehenden Ansprüche,
**dadurch gekennzeichnet, dass** die Antriebsspindel (34) an dem ersten axialen Ende (35) ein Koppelelement (38) zur Verbindung mit dem Verdrängungselement (40) der Kartusche (14) aufweist.

7. Vorrichtung (10) nach Anspruch 6,
**dadurch gekennzeichnet, dass** das Koppelelement (38) drehfest mit der Antriebsspindel (34) verbunden ist und radial von der Antriebsachse (32) beabstandet ein erstes Anschlagelement (66) zum in Eingriff bringen mit dem Verdrängungselement (40) aufweist.

8. Vorrichtung (10) nach einem der vorstehenden Ansprüche,
**gekennzeichnet durch** eine mit dem Antriebsmotor (22) verbundene Motorsteuerung, die eine Sensorik zur Erfassung einer oberen und einer unteren Endposition der Antriebspindel (34) umfasst.

9. Vorrichtung (10) nach Anspruch 8,
**dadurch gekennzeichnet, dass** die Motorsteuerung eingerichtet ist, den Antriebsmotor (22) bei Erfassung der oberen oder unteren Endposition abzuschalten oder die Drehrichtung des Antriebsmotors (22) umzukehren.

10. Vorrichtung (10) nach einem der vorstehenden Ansprüche,
**gekennzeichnet durch** ein elastisches Element (76), welches so angeordnet ist, dass es in einer in das Gehäuse (14) eingefahrenen oberen Endposition der Antriebsspindel bezogen auf die axiale Richtung mittelbar oder unmittelbar zwischen der Antriebsspindel (34) und dem Gehäuse (14) vorgespannt ist.

11. Vorrichtung (10) nach Anspruch 10 in Verbindung mit Anspruch 6 oder Anspruch 7, **dadurch gekennzeichnet, dass** das elastische Element (76) zwischen dem Koppelelement (38) und einem ersten Abschnitt (20) der Gehäusewandung angeordnet ist.

12. Kombination aus einer Vorrichtung (10) nach einem der vorstehenden Ansprüche und einer Kartusche (12),
wobei die Kartusche (12) einem Aufnahmeraum (46) zur Aufnahme des viskosen Mediums, eine Ausgabeöffnung (47) für das viskose Medium und ein dem Aufnahmeraum (46) zugeordnetes Verdrängungselement (40) zum Fördern des viskosen Mediums aus dem Aufnahmeraum (46) durch die Ausgabeöffnung (47) aufweist.

13. Kombination nach Anspruch 12
**dadurch gekennzeichnet, dass** die Kartusche (12) lösbar mit dem Gehäuse (14) verbindbar ist.

14. Kombination nach Anspruch 13,
**dadurch gekennzeichnet, dass** die Kartusche (12) mittels einer Schraubverbindung (48) oder eines Bajonettverbindung mit dem Gehäuse (14) verbindbar ist.

15. Kombination nach einem der Ansprüche 12 bis 14,
**dadurch gekennzeichnet, dass** die Antriebsspindel (34) an dem ersten axialen Ende (35) ein Koppelelement (38) zur Verbindung mit dem Verdrängungselement (40) der Kartusche (12) aufweist,
wobei das Koppelelement (38) drehfest mit der Antriebsspindel (34) verbunden ist und radial von der Antriebsachse (32) beabstandet ein erstes Anschlagelement (66) aufweist,
wobei das Verdrängungselement (40) radial von der Antriebsachse (32) beabstandet ein zweites Anschlagelement (72) aufweist,
und wobei das erste Anschlagelement (66) und das zweite Anschlagelement (72) der Gestalt zusammenwirken, dass das Koppelelement (38) gegen das Verdrängungselement (40) drehsicher abstützbar ist.
